(19) Europäisches Patentamt
European Patent Office
Office européen des brevets

(11) Veröffentlichungsnummer: **0 315 907 B1**

(12) **EUROPÄISCHE PATENTSCHRIFT**

(45) Veröffentlichungstag der Patentschrift: **29.12.93**

(51) Int. Cl.5: **C08G 77/62**, C04B 35/58

(21) Anmeldenummer: **88118390.9**

(22) Anmeldetag: **04.11.88**

# (54) Polysilazane, Verfahren zu ihrer Herstellung, sowie die Herstellung Siliziumnitrid enthaltender keramischer Materialen.

(30) Priorität: **07.11.87 DE 3737921**

(43) Veröffentlichungstag der Anmeldung:
**17.05.89 Patentblatt 89/20**

(45) Bekanntmachung des Hinweises auf die Patenterteilung:
**29.12.93 Patentblatt 93/52**

(84) Benannte Vertragsstaaten:
**BE CH DE FR GB IT LI NL**

(56) Entgegenhaltungen:
**FR-A- 2 190 764**
**FR-A- 2 583 423**
**US-A- 3 036 019**
**US-A- 4 482 669**
**US-A- 4 595 775**

(73) Patentinhaber: **HOECHST AKTIENGESELLSCHAFT**

**D-65926 Frankfurt(DE)**

(72) Erfinder: **Vaahs, Tilo, Dr.**
**Am Flachsland 54**
**D-6233 Kelkheim/Taunus(DE)**
Erfinder: **Kleiner, Hans-Jerg, Dr.**
**Altkönigstrasse 11a**
**D-6242 Kronberg/Taunus(DE)**
Erfinder: **Peuckert, Marcellus, Dr.**
**Platanenweg 8**
**D-6238 Hofheim am Taunus(DE)**
Erfinder: **Brück, Martin**
**Haneckstrasse 17**
**D-6238 Hofheim am Taunus(DE)**
Erfinder: **Aldinger, Fritz, Dr.**
**Barbarossastrasse 44**
**D-6458 Rodenbach(DE)**

EP 0 315 907 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Polysilazane, ihre Herstellung, sowie ihre Weiterverarbeitung zu Siliziumnitrid enthaltendem keramischen Material. Das Siliziumnitrid enthaltende keramische Material wird durch Pyrolyse aus den Polysilazanen erhalten und besteht zum größten Teil aus Siliziumnitrid, welches Anteile an Siliziumkarbid und Kohlenstoff enthält.

Die Pyrolyse von Polysilazanen zu Siliziumnitrid-SiC-haltigem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen oder mit Disilazanen umgesetzt (US-PS 4540803, US-PS 4 543 344, US-PS 4 535 007, US-PS 4 595 775, US-PS 4 397 828, US-PS 4 482 669).

Eine weitere Methode zur Herstellung von Polysilazanen besteht in einer Umsetzung von Aminosilanen mit überschüssigem Ammoniak oder überschüssigem Primären Amin. Die Aminosilane werden ihrerseits durch Umsetzung von Chlorsilanen mit Aminen hergestellt (FR-A1-2583423). Beispielsweise entsteht aus Tetrachlorsilan $SiCl_4$ und Methylamin das Tetrakis(methylamino)silan $Si(NHCH_3)_4$:

$$SiCl_4 + 8\ CH_3NH_2 = Si(NHCH_3)_4 + 4\ CH_3NH_3Cl$$

Das Aminosilan wird anschließend mit überschüssigem Ammoniak umgesetzt, wobei alle Methylaminogruppen durch NH-Gruppen ersetzt werden. Es entstehen viskose bis hochviskose Polysilazane, die mit einer keramischen Ausbeute von 72-79 Gew.-% zu Siliziumnitrid enthaltendem Material pyrolysiert werden können.

Der Nachteil dieses Verfahrens besteht in der Verwendung großer Mengen Alkylamin, welches dann zur Hälfte bei der Herstellung des Aminosilans als Alkylaminhydrochlorid wieder ausfällt. Die aus dem Aminosilan hergestellten Poylmeren sind viskos und deshalb nur schwer zu verarbeiten; eine Faserherstellung ist nicht möglich. Es bestand daher die Aufgabe, ein einfaches Verfahren zu finden, welches zu festen Polysilazanen führt, die in gängigen Lösungsmitteln löslich sind und/oder schmelzbar sind und daher aus einer Lösung und/oder der Schmelze versponnen werden können. Die vorliegende Erfindung löst diese Aufgabe.

Ein Gegenstand der vorliegenden Erfindung ist ein Verfahren zur Herstellung von polymeren Silazanen, dadurch gekennzeichnet, daß man ein oder mehrere Dialkylaminoorganyldichlorsilane der Formel $RSiCl_2\text{-}NR'R'$, worin R = $C_1$-$C_4$-Alkyl, Vinyl oder Phenyl und R' = $C_1$-$C_4$-Alkyl ist, mit mindestens 3,35 Mol Ammoniak pro Mol Silan in einem Lösungsmittel bei Temperaturen von -80 °C bis +70 °C umsetzt. Vorzugsweise ist R = Methyl, Ethyl, Vinyl oder Phenyl und R' = Methyl. Insbesondere ist R = Ethyl und R' = Methyl.

Die als Ausgangsprodukte für die polymeren Silazane eingesetzten Dialkylaminoorganyldichlorsilane $RSiCl_2\text{-}NR'R'$ (im folgenden auch als "Aminochlorsilane" bezeichnet) können nach S.S. Washburne, W.R. Peterson, J. Organometal. Chem. 21 (1970), Seite 59 wie folgt erhalten werden:

Ein oder mehrere Organyltrichlorsilane $RSiCl_3$, wobei R für Alkylgruppen mit 1 bis 4 C-Atomen, für Vinyl oder Phenyl steht, werden mit Dialkylamin HNR'R' umgesetzt, wobei R' für Alkylgruppen mit 1 bis 4 C-Atomen steht. Die Umsetzung wird in aprotischen Lösungsmitteln, vorzugsweise polaren wie Ethern, insbesondere in THF durchgeführt.

Das Molverhältnis von Organyltrichlorsilan zu Dialkylamin kann Werte zwischen 1:1 und 1:3 annehmen, bevorzugt wird ein Verhältnis von etwa 1:2.

Die bei der Reaktion entstehenden Ammoniumsalze fallen aus der Reaktionslösung aus, während die gebildeten Aminochlorsilane in Lösung bleiben.

Die erhaltenen Aminochlorsilane der Formel $RSiCl_2\text{-}NR'R'$ werden erfindungsgemäß pro Mol mit mindestens 3,35 Mol, vorzugsweise mit mindestens 3,5 Mol Ammoniak in aprotischen Lösungsmitteln, vorzugsweise polaren wie Ethern, insbesondere THF umgesetzt. Dies geschieht bei Temperaturen zwischen -80 °C und +70 °C, bevorzugt bei -10 °C bis 0 °C. Dabei reagiert ein Ammoniakmolekül zunächst mit zwei SiCl-Funktionen zu einer NH-Brücke zwischen den beiden Siliziumatomen:

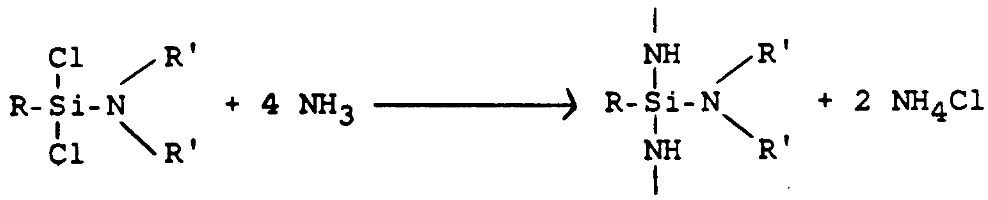

Dadurch entstehen oligomere Einheiten. Anschließend erfolgt überraschenderweise eine teilweise Verdrängung der Dialkylaminogruppen vom Siliziumatom, so daß eine neuartige Klasse von vernetzten polymeren Silazanen entsteht. Dabei werden die endständigen Dialkylaminogruppen durch NH-Brücken ersetzt, so daß eine zusätzliche Vernetzung zustande kommt:

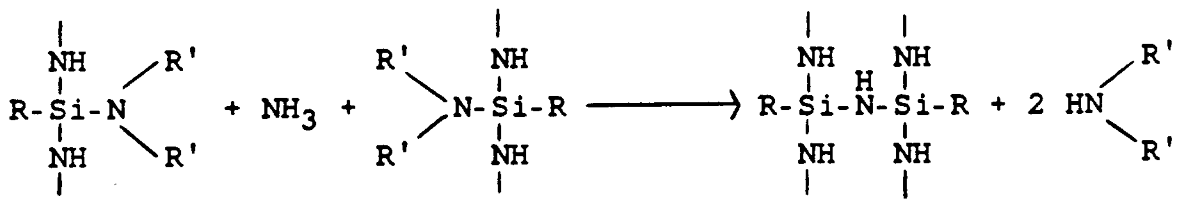

Die Verdrängung der Dialkylaminogruppen erfolgt jedoch, wie gesagt, nicht vollständig; ein Teil von ihnen bleibt an Siliziumatome gebunden und ist dadurch im polymeren Silazan enthalten.

Die entstehenden neuartigen polymeren Silazane lösen sich in allen gängigen aprotischen Lösungsmitteln vollständig. Sie besitzen die folgenden Struktureinheiten:

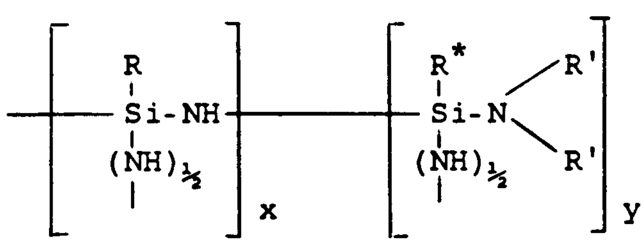

mit $x + y = 1$,

wobei für R* zwar dieselben Reste in Frage kommen wie für R, aber R und R* gleich oder verschieden sein können (verschieden, wenn mehr als ein Aminochlorsilan mit $NH_3$ umgesetzt wird).

Si ist hier nie direkt mit Si verbunden, sondern immer über eine NH-Brücke. Ist beispielsweise $x = 0{,}9$ (und damit $y = 0{,}1$), so sind 10 % der ursprünglich vorhandenen Dialkylaminogruppen im Polymeren noch enthalten, 90 % der Siliziumatome sind dreifach über NH-Brücken vernetzt. Das steuerbare Verhältnis von x zu y bestimmt den Vernetzungsgrad und damit die Viskosität und die Verarbeitbarkeit zur Keramik.

Dabei erhält man Werte von $x = 0{,}7\text{-}0{,}95$ ($y = 0{,}3\text{-}0{,}05$), wenn man mindestens 3,35 Mol $NH_3$ pro Mol Aminochlorsilan verwendet. Vorzugsweise ist $x = 0{,}85\text{-}0{,}95$ ($y = 0{,}15\text{-}0{,}05$), dies ist dann der Fall, wenn man mindestens 3,5 Mol $NH_3$ pro Mol Aminochlorsilan verwendet. Im allgemeinen verwendet man höchstens 8 Mol, vorzugsweise höchstens 6 Mol $NH_3$ pro Mol Aminochlorsilan. Natürlich führt auch eine größere relative Menge $NH_3$ als 8 Mol zum Erfolg, aber dieser höhere Aufwand ist überflüssig.

Ein weiterer Gegenstand der vorliegenden Erfindung sind demgemäß polymere Silazane der allgemeinen Formel

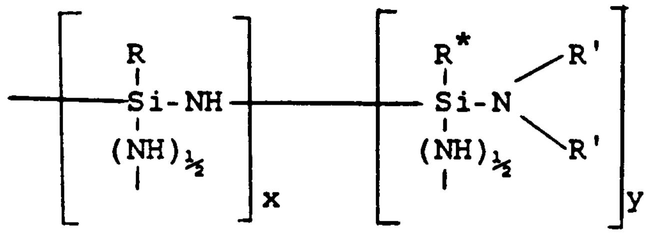

worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist. Dabei ist wieder vorzugsweise R, R* = Methyl, Ethyl, Vinyl oder Phenyl und R′ = Methyl; besonders bevorzugt ist R, R* = Ethyl und R′ = Methyl.

Ein weiterer Gegenstand der vorliegenden Erfindung sind polymere Silazane, dadurch erhältlich, daß man ein oder mehrere Dialkylaminoorganyldichlorsilane der Formel $RSiCl_2$-NR′R′, worin R = $C_1$-$C_4$-Alkyl, Vinyl oder Phenyl und R′ = $C_1$-$C_4$-Alkyl ist, mit mindestens 3,35 Mol Ammoniak pro Mol Silan in einem Lösungsmittel bei Temperaturen von -80 °C bis +70 °C umsetzt.

Die Strukturformel der erfindungsgemäßen polymeren Silazane zeigt, daß ihr relativer Gehalt an Stickstoff zwangsläufig hoch ist: das Verhältnis von Silizium zu Stickstoff besitzt Werte zwischen 1:1,3 und 1:2. In $Si_3N_4$ beträgt dieses Verhältnis 1:1,33, so daß sich durch Abspaltung von Ammoniak bei der Pyrolyse der Polysilazane das für die Siliziumnitridkeramik richtige Verhältnis von Silizium und Stickstoff leicht einstellen kann.

Dadurch wird verhindert, daß sich bei der Pyrolyse elementares Silizium bildet. Dies ist eine große Schwierigkeit bei dem von D. Seyferth, G. H. Wiseman und C. Prud'homme (US-PS 4 397 828, J. Amer. Ceram. Soc. 66 (1983) C 13) beschriebenen Verfahren, welches ausgehend von Dichlorsilan $H_2SiCl_2$ und Ammoniak zu einem Polysilazan mit einem Verhältnis Si:N = 1:1 führt. Bei der Pyrolyse derartiger Polysilazane entstehen $\alpha$- und $\beta$-$Si_3N_4$, und der Überschuß an Silizium im Polysilazan erscheint als elementares Silizium in der Keramik.

Die erfindungsgemäßen stickstoffreichen Polysilazane können durch Pyrolyse zu amorphen, dichten Materialien umgewandelt werden, die Siliziumnitrid enthalten und in Spuren auch H und O enthalten können.

Ein weiterer Gegenstand der vorliegenden Erfindung ist daher ein Verfahren zur Herstellung von Siliziumnitrid enthaltendem keramischen Material, dadurch gekennzeichnet, daß man die oben durch ihre Strukturformel oder durch das Verfahren zu ihrer Herstellung definierten polymeren Silazane in inerter Atmosphäre bei 800 bis 1400 °C pyrolysiert. Die inerte Atmosphäre kann dabei aus $N_2$, Ar oder He bestehen, vorzugsweise nimmt man $N_2$ oder Ar. Bei Pyrolysetemperaturen oberhalb 1200 °C, etwa im Bereich von 1200 °C bis 1400 °C entstehen teilamorphe, mikrokristalline keramische Werkstoffe, die als kristalline Phase $\alpha$-$Si_3N_4$ enthalten.

Ein besonderer Vorteil ist, daß sich die Polysilazane vor der Pyrolyse nach verschiedenen Verfahren zu dreidimensionalen Formkörpern formen lassen. Die einfachste Methode der Formgebung ist das in den Beispielen 1, 2 und 3 beschriebene Pressen von Körpern (einachsiales oder isostatisches Pressen). Andere Formgebungsverfahren wie Schlickergießen oder Extrudieren. sind ebenfalls möglich.

Eine wichtige Methode der Formgebung ist das Ziehen von Fasern aus den Polysilazanen. Dabei lassen sich Fasern aus hochviskosen Lösungen des Polysilazans in Lösungsmitteln wie Toluol, Tetrahydrofuran oder Hexan ziehen; im falle von R, R* = Ethyl, R′ = Methyl und x = 0,85 bis 0,95 kann man außer aus Lösungen auch aus viskosen Schmelzen des Polysilazans Fasern ziehen. Das Faserziehen geschieht vorteilhafterweise mit Spinndüsen von 80 bis 150 $\mu$m Durchmesser. Durch anschließendes Strecken wird die Faser verjüngt, so daß nach der Pyrolyse eine sehr feste Faser von 2 bis 20 $\mu$m, insbesondere 5-15 $\mu$m Durchmesser entsteht. Wird aus einer Lösung gesponnen, so wird die Faser nach dem Strecken zunächst in Luft oder Inertgas getrocknet. Wird aus der Schmelze gesponnen, wobei die Schmelztemperatur im allgemeinen bei 60 bis 150 °C liegt, so wird die Faser nach dem Strecken kurze Zeit in Luft oder Ammoniak bei Raumtemperatur weiter vernetzt, damit sie beim anschließenden Pyrolysieren nicht zerfällt. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der erfindungsgemäßen Polysilazane ist die Herstellung dichter, gut haftender amorpher oder mikrokristalliner keramischer Beschichtungen auf Metallen, insbesondere Stählen, oder auf Keramiken wie $Al_2O_3$, $ZrO_2$, MgO, SiC oder Siliziumnitrid. Die Beschichtung erfolgt

mit Hilfe einer Lösung des Polysilazans in organischen Lösungsmitteln wie Toluol, Tetrahydrofuran, Hexan. Falls R, R* = Ethyl, R′ = Methyl und x = 0,85 bis 0,95 ist, so ist das Polysilazan schmelzbar, und daher kann eine Beschichtung außer mittels einer Lösung des Polysilazans auch mittels einer Schmelze durch Eintauchen des zu beschichtenden Körpers erfolgen. Die pyrolytische Umwandlung in eine amorphe bzw. mikrokristalline Schicht erfolgt im gleichen Temperaturbereich von 800 bis 1200 °C, bzw. 1200 °C bis 1400 °C, unter Inertgas wie bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Die schmelzbaren Polysilazane mit R, R* = Ethyl, R′ = Methyl und x = 0,85-0,95 können auch geschmolzen und dann in beliebige Gießformen gegossen werden. Wegen der hohen keramischen Ausbeute von 70 bis 90 Gew.-% können diese Gußteile durch Pyrolyse mit einem sehr langsamen Temperaturaufheizprogramm zu praktisch riß- und porenfreien amorphen, mikrokristallinen oder kristallinen, keramischen Formkörpern umgewandelt werden.

Weiter kann man die erfindungsgemäßen Polysilazane mit gleichhoher keramischer Ausbeute von 70-90 Gew.-% statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem Siliumnitrid (Pyrolyse oberhalb 1250 °C, vorzugsweise oberhalb 1300 °C).

Die Pyrolyse in $NH_3$ läßt sich auf alle nach den oben beschriebenen Formgebungsverfahren hergestellten Formkörper, also aus Polysilazan geformte Körper, Fasern, Beschichtungen und gegossene Teile anwenden.

Die beschriebenen Polysilazane können auch mit anderen keramischen Pulvern wie z.B. $Al_2O_3$, BN, SiC, $Si_3N_4$ vermischt, mit diesen zusammen weiterverarbeitet und schließlich gesintert werden. Es entstehen dabei neuartige Verbundwerkstoffe mit verbesserten mechanischen, thermischen oder chemischen Eigenschaften.

**Beispiel 1**

In einem 1 l-Dreihalskolben mit aufgesetztem Kühlfinger und Rührer löste man unter Stickstoffatmosphäre 30 ml (37,3 g; 0,25 mol) Methyltrichlorsilan $H_3CSiCl_3$ in 600 ml trockenem THF. Der Kühlfinger wurde auf -78 °C (Trockeneis) und die Lösung mit einem Kühlbad auf -10 °C gekühlt. In diese Lösung leitete man unter Rühren 31,7 ml (23 g; 0,51 mol) Dimethylamin $(H_3C)_2NH$ so ein, daß die Innentemperatur nicht über -5 °C stieg. Dabei fiel Dimethylammoniumchlorid $(H_3C)_2NH_2Cl$ aus. Anschließend leitete man in die so erhaltene Lösung von Dimethylaminodichlormethylsilan $H_3CSiCl_2$-$N(CH_3)_2$ 33 ml (25,5 g; 1,5 mol) Ammoniak so ein, daß die Innentemperatur nicht über -5 °C stieg.
Anschließend wurde das Kühlbad entfernt und die Reaktionsmischung auf Raumtemperatur (+20 °C) erwärmt. Man rührte eine Stunde bei dieser Temperatur. Unter Stickstoff filtrierte man das ausgefallene Ammoniumchlorid $NH_4Cl$ und das Dimethylammoniumchlorid $(H_3C)_2$-$NH_2Cl$ ab.
Das Lösungsmittel und alle flüchtigen Bestandteile des Filtrats wurden bei Unterdruck und Raumtemperatur abdestilliert. Dabei nahm die Viskosität stark zu und es begann sich ein farbloser Festkörper zu bilden.

Beim Trocknen an der Vakuumpumpe schäumte dieser Rückstand auf und wurde trocken und fest. Das erhaltene Polysilazan enthielt dann kein Lösungsmittel mehr. Das $^1$H-NMR in $CDCl_3$ zeigte die Si-Methyl, die NH- und die N-Methyl-Resonanzen mit den Intensitäten 3 : 1,45 : 0,6 als jeweils breite Signalgruppen. Das Polysilazan löste sich in den üblichen aprotischen Lösungsmitteln.

Die Analysenwerte zeigten ein Verhältnis von Si zu N von 1 : 1,37. Das erhaltene Polysilazan wurde unter 3000 bar zu einem porösen Körper von 10 x 10 x 10 $mm^3$ gepreßt und bei 1000 °C unter Stickstoff eine Stunde lang pyrolysiert. Man erhielt einen schwarzen keramischen Körper, der, verglichen mit der eingesetzten Substanz, 30 Gew.-% Masseverlust aufwies, d.h. die keramische Ausbeute betrug 70 Gew.-%.

**Beispiel 2**

In einem 1 l-Dreihalskolben mit Kühlfinger und Rührvorrichtung löste man unter Stickstoffatmosphäre 50 ml (63,0 g; 0,39 mol) Vinyltrichlorsilan in 600 ml THF. Man kühlte den Kühlfinger auf -78 °C (Trockeneis) und die Reaktionslösung auf -10 °C. Anschließend leitete man 49 ml (35,1 g; 0,78 mol) Dimethylamin $(H_3C)_2NH$ so ein, daß die Temperatur nicht über 0 °C stieg. Dabei bildete sich Dimethylammoniumhydrochlorid $(H_3C)_2NH_2Cl$, welches ausfiel. Nach beendetem Einleiten wurde auf Raumtemperatur

(+20 °C) erwärmt und der weiße Niederschlag abfiltriert. Das Filtrat wurde vom Lösungsmittel befreit und der Rückstand destillativ aufgearbeitet.

Bei 138 °C und 1 bar destillierten 33,5 g Vinyl(dimethylamino)dichlorsilan als klare, leicht bewegliche Flüssigkeit über.

Das $^1$H-NMR-Spektrum zeigte ein ABX-Spinsystem für die Vinylgruppe bei $\delta$ = 6,2 ppm (Intensität 1) und ein Singulett für die Dimethylaminogruppe bei $\delta$ = 2,58 ppm (Intensität 2).

Man Löste die erhaltenen 33,7 g (0,21 mol) Vinyl(dimethylamino)dichlorsilan in einem 1 l-Dreihalskolben mit Kühlfinger und Rührvorrichtung in 500 ml trockenem THF unter Stickstoffatmosphäre.

Die Lösung wurde auf -10 °C gekühlt, der Kühlfinger auf -78 °C (Trockeneis). Man leitete 28 ml (21,6 g; 1,27 mol) Ammoniak so ein, daß die Innentemperatur -5 °C nicht überschritt. Nach beendeter Reaktion wurde auf 20 °C erwärmt und das ausgefallene Ammoniumchlorid abfiltriert. Anschließend wurde das Lösungsmittel aus dem Filtrat bei 20 °C und Unterdruck abdestilliert, wobei ein viskoser Rückstand verblieb, der beim Trocknen an der Vakuumpumpe fest und trocken wurde (12 g).

Dieser war vollständig löslich in den üblichen aprotischen Lösungsmitteln. Das $^1$H-NMR in $CDCl_3$ zeigte die Resonanzen für die Vinyl-, die NH- und die $N(CH_3)_2$-Gruppe im Verhältnis 3 : 1,45 : 0,6. Die Vinylgruppe erschien zwischen 5,5 und 6,5 ppm als breite Signalgruppe, NH zwischen 0,5 und 1,5 ppm und $N(CH_3)_2$ bei 2,3-2,7 ppm.

Die Elementaranalyse zeigte ein Verhältnis von Si zu N von 1 : 1,55.

Aus diesem Polysilazan wurde unter 3000 bar ein Körper von 10 x 10 x 10 $mm^3$ gepreßt und unter Stickstoff eine Stunde lang bei 1000 °C pyrolysiert. Man erhielt so einen amorphen keramischen Körper, dessen Masse einer keramischen Ausbeute von 86 Gew.-% entsprach.

**Beispiel 3**

In einem 1 l-Dreihalskolben mit Kühlfinger und Rührvorrichtung löste man unter Stickstoffatmosphäre 35 ml (42,5 g; 0,26 mol) Ethyltrichlorsilan in 600 ml trockenem Tetrahydrofuran. Man kühlte den Kühlfinger auf -78 °C (Trockeneis) und die Lösung auf -10 °C. Nun leitete man 31 ml (23,8 g; 0,53 mol) Dimethylamin $HN(CH_3)_2$ so ein, daß die Innentemperatur nicht über -5 °C stieg. Anschließend wurden 17,5 ml (13,5 g; 0,79 mol) Ammoniak in die erhaltene Lösung von Dimethylaminodichlorethylsilan $C_2H_5SiCl_2$-$N(CH_3)_2$ eingeleitet.

Danach erwärmte man auf Zimmertemperatur und trennte die ausgefallenen Ammoniumsalze ab. Das Lösungsmittel wurde bei Unterdruck und 20 °C abdestilliert. Es blieb ein weicher Festkörper zurück. Erwärmte man, so wurde die Substanz in einem stetigen Prozeß zunehmend flüssiger. Das Verhältnis von Silizium zu Stickstoff betrug 1 : 1,4. Das Polysilazan löste sich vollständig in den üblichen aprotischen Lösungsmitteln.

Die gesamten Resonanzlinien für die Si-Ethyl und die Si-NH-Gruppen fanden sich im $^1$H-NMR-Spektrum als unstrukturiertes breites Signal zwischen $\delta$ = 0,1 und $\delta$ = 1,6 ppm. Die N-Methyl-Gruppe erschien bei $\delta$ = 2,5 ppm.

Erwärmte man das Polysilazan auf +80 °C, so ließen sich aus der Schmelze Fasern ziehen, die bei Raumtemperatur für eine Stunde der atmosphärischen Luft ausgesetzt wurden. Dadurch wurden die Fasern unschmelzbar und behielten bei der Pyrolyse ihre Form.

**Beispiel 4**

In einem 1 l-Dreihalskolben mit Kühlfinger und Rührvorrichtung wurden 15 ml (18,6 g/0,11 mol) Ethyltrichlorsilan und 45 ml (57,1 g/0,35 mol) Vinyltrichlorsilan gemischt und in 700 ml trockenem THF gelöst. Der Kühlfinger wurde auf -78 °C und die Lösung auf -10 bis 0 °C gekühlt. Anschließend wurden 41,9 g (0,93 mol) Dimethylamin so zugegeben, daß die Innentemperatur nicht über +10 °C stieg.

Daraufhin wurden 31,6 g (1,87 mol) Ammoniak zugegeben. Nach beendeter Reaktion wurde das Ammoniumchlorid und das Dimethylaminhydrochlorid abgetrennt.

Alle flüchtigen Bestandteile wurden bei Unterdruck und 20 °C abdestilliert. Es blieb ein zäher Rückstand (26,1 g).

Im $^1$H-NMR-Spektrum in $CDCl_3$ erschienen die Resonanzen für die Vinylgruppen zwischen $\delta$ = 5,5-6,5 ppm, für die Dimethylaminogruppen zwischen $\delta$ = 2,3-2,5 ppm und für die Ethyl- und NH-Gruppen zwischen $\delta$ = 0,2-1,3 ppm. Die relativen Intensitäten betrugen in der eben angegebenen Reihenfolge 15 : 1,7 : 18.

Die Substanz wurde bei erhöhter Temperatur beweglicher und es ließen sich klebrige Fasern ziehen.

Die keramische Ausbeute bei der Pyrolyse in Argon lag bei 76 Gew.-%.

**Beispiel 5**

In einem 1 l-Dreihalskolben mit Kühlfinger und Rührvorrichtung wurden 25 ml (31,6 g/0,19 mol) Vinyltrichlorsilan und 25,1 ml (31,19/0,19 mol) Ethyltrichlorsilan gemischt und in 700 ml trockenem THF gelöst. Der Kühlfinger wurde auf -78 °C und die Lösung auf -10 bis 0 °C gekühlt. Anschließend gab man 34,1 g (0,76 mol) Dimethylamin so zu, daß die Innentemperatur nicht über +10 °C anstieg.
Daraufhin wurden 25,9 (1,52 mol) Ammoniak zugegeben. Nach beendeter Reaktion wurde das Ammoniumchlorid und das Dimethylaminhydrochlorid abgetrennt.
Alle flüchtigen Bestandteile wurden bei Unterdruck und 20 °C abdestilliert. Es blieb ein sehr zäher Rückstand (22,2 g), der bei Temperaturerhöhung beweglicher wurde.
Im $^1$H-NMR-Spektrum in $CDCl_3$ erschienen die Signale für die Vinylgruppen zwischen $\delta$ = 5,5-6,5 ppm, für die Dimethylaminogruppen zwischen $\delta$ = 2,3-2,6 ppm und für die Ethyl- und NH-Gruppen zwischen $\delta$ = 0,2-1,5 ppm. Die relativen Intensitäten betrugen in der eben angegebenen Reihenfolge 7 : 1,5 : 17,7.
Bei +50 °C ließen sich klebrige Fasern ziehen.
Die keramische Ausbeute bei der Pyrolyse in Argon betrug 74 Gew.-%.

**Patentansprüche**

1. Verfahren zur Herstellung von polymeren Silazanen, dadurch gekennzeichnet, daß man ein oder mehrere Dialkylaminoorganyldichlorsilane der Formel
   $RSiCl_2$-NR′R′, worin
   R = $C_1$-$C_4$-Alkyl, Vinyl oder Phenyl und
   R′ = $C_1$-$C_4$-Alkyl ist,
   mit mindestens 3,35 Mol Ammoniak pro Mol Silan in einem Lösungsmittel bei Temperaturen von -80 °C bis +70 °C umsetzt.

2. Verfahren nach Anspruch 1, dadurch gekennzeichnet, daß R = Methyl, Ethyl, Vinyl oder Phenyl und R′ = Methyl ist.

3. Verfahren nach Anspruch 1, dadurch gekennzeichnet, daß R = Ethyl und R′ = Methyl ist.

4. Verfahren nach einem der Ansprüche 1 bis 3, dadurch gekennzeichnet, daß man mindestens 3,5 mol Ammoniak pro Mol Dialkylamminoorganyldichlorsilan verwendet.

5. Polymere Silazane der allgemeinen Formel

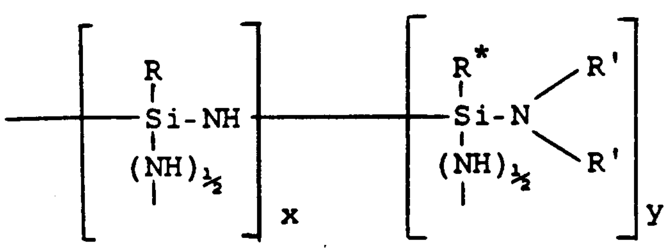

   worin R und R* gleich oder verschieden sein können und R, R* = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7-0,95 ist.

6. Polymere Silazane nach Anspruch 5, dadurch gekennzeichnet, daß unabhängig voneinander R, R* = Methyl, Ethyl, Vinyl oder Phenyl und R′ = Methyl ist.

7. Polymere Silazane nach Anspruch 5, dadurch gekennzeichnet, daß R, R* = Ethyl und R′ = Methyl ist.

8. Polymere Silazane nach einem der Ansprüche 5 bis 7, dadurch gekennzeichnet, daß x = 0,85-0,95 ist.

9. Polymere Silazane, erhältlich nach dem Verfahren gemäß einem der Ansprüche 1 bis 4.

**10.** Verfahren zur Herstellung von Siliziumnitrid enthaltendem keramischen Material, dadurch gekennzeichnet, daß man polymere Silazane gemäß einem der Ansprüche 5 bis 9 in inerter Atmosphäre bei 800 bis 1400 °C pyrolysiert.

**11.** Verfahren nach Anspruch 10, dadurch gekennzeichnet, daß man zur Herstellung von Siliziumnitrid enthaltenden keramischen Fasern die polymeren Silazane zunächst in einem organischen Lösungsmittel löst, aus dieser Lösung Fasern zieht und diese nach Verdampfung des Lösungsmittels pyrolysiert.

**12.** Verfahren nach Anspruch 10, dadurch gekennzeichnet, daß man zur Herstellung von Siliziumnitrid enthaltenden keramischen Formkörpern die pulverförmigen polymeren Silazane vor der Pyrolyse zu Formkörpern preßt.

**13.** Verfahren nach Anspruch 10, dadurch gekennzeichnet, daß man zur Herstellung von Siliziumnitrid enthaltenden keramischen Beschichtungen die polymeren Silazane zunächst in einem organischen Lösungsmittel löst, mit dieser Lösung die Beschichtung vornimmt und diese nach Verdampfung des Lösungsmittels pyrolysiert.

**14.** Verfahren zur Herstellung von Silizumnitrid enthaltenden keramischen Fasern, dadurch gekennzeichnet, daß man polymere Silazane gemäß Anspruch 7 schmilzt, aus der Schmelze bei 60 bis 100 °C Fasern zieht, diese mit Luft unschmelzbar macht und dann bei 800 bis 1400 °C in inerter Atmosphäre pyrolysiert.

**15.** Verfahren zur Herstellung von Siliziumnitrid enthaltenden keramischen Formkörpern, dadurch gekennzeichnet, daß man polymere Silazane gemäß Anspruch 7 schmilzt, die Schmelze durch Gießen, Spritzgießen oder Extrudieren zu Formkörpern verarbeitet, diese mit Luft oder $NH_3$ unschmelzbar macht und dann bei 800 °C bis 1400 °C in inerter Atmosphäre pyrolysiert.

**16.** Verfahren nach einem der Ansprüche 10 bis 15, dadurch gekennzeichnet, daß man statt in inerter Atmosphäre in $NH_3$- oder $N_2/H_2$-Atmosphäre pyrolysiert.

**17.** Verfahren nach einem der Ansprüche 10 bis 16, dadurch gekennzeichnet, daß man bei 800-1200 °C pyrolysiert.

**18.** Verfahren nach einem der Ansprüche 10 bis 16, dadurch gekennzeichnet, daß man bei 1200-1400 °C pyrolysiert.

**Claims**

**1.** A process for the preparation of polymeric silazanes, which comprises reacting one or more dialkylaminoorganyldichlorosilanes of the formula
$RSiCl_2$-NR'R' in which
R is $C_1$-$C_4$-alkyl, vinyl or phenyl, and
R' is $C_1$-$C_4$-alkyl,
with at least 3.35 moles of ammonia per mole of silane in a solvent at temperatures from -80 °C to +70 °C.

**2.** The process as claimed in claim 1, wherein R is methyl, ethyl, vinyl or phenyl, and R' is methyl.

**3.** The process as claimed in claim 1, wherein R is ethyl and R' is methyl.

**4.** The process as claimed in any one of claims 1 to 3, wherein at least 3.5 moles of ammonia are used per mole of dialkylaminoorganyldichlorosilane.

**5.** A polymeric silazane of the formula

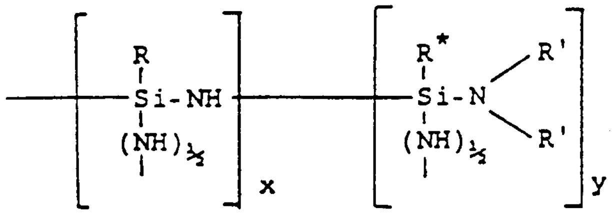

in which R and R* may be identical or different and R and R* are $C_1$-$C_4$-alkyl, vinyl or phenyl, R' is $C_1$-$C_4$-alkyl, and x and y denote the molar fractions of the two structural units, where x + y = 1 and x = 0.7-0.95.

**6.** A polymeric silazane as claimed in claim 5, wherein, independently of one another, R and R* are methyl, ethyl, vinyl or phenyl, and R' is methyl.

**7.** A polymeric silazane as claimed in claim 5, wherein R and R* are ethyl and R' is methyl.

**8.** A polymeric silazane as claimed in any one of claims 5 to 7, wherein x = 0.85-0.95.

**9.** A polymeric silazane which can be obtained by the process as claimed in any one of claims 1 to 4.

**10.** A process for the preparation of silicon nitride-containing ceramic material, which comprises pyrolyzing a polymeric silazane as claimed in any one of claims 5 to 9 in an inert atmosphere at 800 to 1400 °C.

**11.** The process as claimed in claim 10, wherein, in order to produce silicon nitride-containing ceramic fibers, the polymeric silazane is initially dissolved in an organic solvent, and fibers are drawn from this solution and pyrolyzed after evaporation of the solvent.

**12.** The process as claimed in claim 10, wherein, in order to produce silicon nitride-containing ceramic shaped articles, the pulverulent polymeric silazane is pressed to form shaped articles before pyrolysis.

**13.** The process as claimed in claim 10, wherein, in order to produce silicon nitride-containing ceramic coatings, the polymeric silazane is initially dissolved in an organic solvent, the coating procedure is carried out using this solution, and the coating is pyrolyzed after evaporation of the solvent.

**14.** A process for the production of silicon nitride-containing ceramic fibers, which comprises melting a polymeric silazane as claimed in claim 7, drawing fibers from the melt at 60 to 100 °C, and rendering these fibers infusible using air and then pyrolyzing them at 800 to 1400 °C in an inert atmosphere.

**15.** A process for the production of silicon nitride-containing ceramic shaped articles, which comprises melting a polymeric silazane as claimed in claim 7, processing the melt into shaped articles by casting, injection molding or extrusion, and rendering these shaped articles infusible using air or $NH_3$ and then pyrolyzing them at 800 °C to 1400 °C in an inert atmosphere.

**16.** The process as claimed in any one of claims 10 to 15, wherein the pyrolysis is carried out in an $NH_3$ or $N_2/H_2$ atmosphere instead of in an inert atmosphere.

**17.** The process as claimed in any one of claims 10 to 16, wherein the pyrolysis is carried out at 800-1200 °C.

**18.** The process as claimed in any one of claims 10 to 16, wherein the pyrolysis is carried out at 1200-1400 °C.

## Revendications

**1.** Procédé pour la préparation de silazanes polymères, caractérisé en ce qu'on fait réagir un ou plusieurs dialkylaminoorganodichlorosilanes de formule $RSiCl_2-NR'R'$, dans laquelle :

R = alkyle en $C_1$-$C_4$, vinyle ou phényle et

R' = alkyle en $C_1$-$C_4$,

avec au moins 3,35 moles d'ammoniac par mole de silane dans un solvant à des températures de -80 °C à +70 °C.

**2.** Procédé selon la revendication 1, caractérisé en ce que R = méthyle, éthyle, vinyle ou phényle et R' = méthyle.

**3.** Procédé selon la revendication 1, caractérisé en ce que R = éthyle et R' = méthyle.

**4.** Procédé selon l'une des revendications 1 à 3, caractérisé en ce qu'on utilise au moins 3,5 moles d'ammoniac par mole de dialkylaminoorganodichlorosilane.

**5.** Silazanes polymères de formule générale

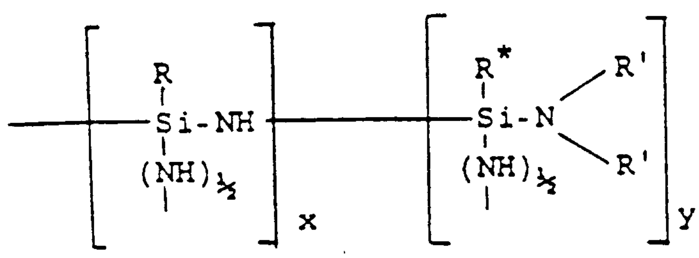

dans laquelle R et R* peuvent être identiques ou différents et R, R* = alkyle en $C_1$-$C_4$, vinyle ou phényle et R' = alkyle en $C_1$-$C_4$, et x, y signifient les fractions molaires des deux unités structurales$_1$ avec x + y = 1 et x = 0,7-0,95.

**6.** Silazanes polymères selon la revendication 5, caractérisés en ce que indépendamment l'un de l'autre, R, R* = méthyle, l'éthyle, vinyle ou phényle et R' = méthyle.

**7.** Silazanes polymères selon la revendication 5, caractérisés en ce que R, R* = éthyle et R' = méthyle.

**8.** Silazanes polymères selon l'une des revendications 5 à 7, caractérisés en ce que x = 0,85-0,95.

**9.** Silazanes polymères que l'on peut obtenir selon le procédé conforme à l'une des revendications 1 à 4.

**10.** Procédé pour la préparation d'un matériau céramique contenant du nitrure de silicium, caractérisé en ce qu'on pyrolyse sous une atmosphère inerte à 800 à 1400 °C des silazanes polymères selon l'une des revendications 5 à 9.

**11.** Procédé selon la revendication 10, caractérisé en ce que, pour la préparation de fibres céramiques contenant du nitrure de silicium, on dissout d'abord les silazanes polymères dans un solvant organique, on étire des fibres à partir de cette solution et on pyrolyse celles-ci après évaporation du solvant.

**12.** Procédé selon la revendication 10, caractérisé en ce que pour la préparation de produits moulés céramiques contenant du nitrure de silicium, on comprime les silazanes polymères pulvérulents en corps moulés,avant la pyrolyse.

**13.** Procédé selon la revendication 10, caractérisé en ce que pour la préparation de revêtements céramiques contenant du nitrure de silicium, on dissout d'abord les silazanes polymères dans un solvant organique, on effectue l'enduction avec cette solution et on pyrolyse celle-ci après évaporation du solvant.

14. Procédé pour la préparation de fibres céramiques contenant du nitrure de silicium, caractérisé en qu'on fait fondre des silazanes polymères selon la revendication 7, on étire, à des températures allant 60 à 100 ° C, des fibres à partir de la masse fondue, on rend celles-ci non fusibles au moyen d'air, puis on pyrolyse à des températures allant de 800 à 1400 ° C sous une atmosphère inerte.

15. Procédé pour la préparation de produits moulés céramiques contenant du nitrure de silicium, caractérisé en ce qu'on fait fondre des silazanes polymères selon la revendication 7, on transforme la masse fondue par coulée, injection ou extrusion en des produits moulés, on rend ceux-ci non fusibles au moyen d'air ou de $NH_3$, puis on les pyrolyse à des températures de 800 ° C à 1400 ° C sous une atmosphère inerte.

16. Procédé selon l'une des revendications 10 à 15, caractérisé en ce qu'on utilise pour la pyrolyse une atmosphère de $NH_3$ ou de $N_2/H_2$ au lieu de l'atmosphère inerte.

17. Procédé selon l'une des revendications 10 à 16, caractérisé en ce qu'on pyrolyse à des températures de 800 ° C à 1200 ° C.

18. Procédé selon l'une des revendications 10 à 16, caractérisé en ce qu'on pyrolyse à des températures de 1200 ° C à 1400 ° C.